(19) Europäisches Patentamt
European Patent Office
Office européen des brevets

(11) Publication number : 0 239 157 B1

# (12) EUROPEAN PATENT SPECIFICATION

(45) Date of publication of patent specification : 02.01.91 Bulletin 91/01

(51) Int. Cl.$^5$ : C08L 69/00, C08L 67/02

(21) Application number : 87200436.1

(22) Date of filing : 10.03.87

## (54) Polymer mixture which comprises an aromatic polycarbonate, a polybutylene terephtalate and an agent to improve the impact strength.

(30) Priority : 28.03.86 NL 8600806

(43) Date of publication of application : 30.09.87 Bulletin 87/40

(45) Publication of the grant of the patent : 02.01.91 Bulletin 91/01

(84) Designated Contracting States : DE FR GB IT NL

(56) References cited :
EP-A- 0 107 048
EP-A- 0 158 822
FR-A- 2 343 023

(73) Proprietor : GENERAL ELECTRIC COMPANY
1 River Road
Schenectady New York 12305 (US)

(72) Inventor : Verhoeven, Jeroen Johannes
General Electric Plastics B.V. P.O. Box 117
NL-4600 AC Bergen op Zoom (NL)
Inventor : Pearson, Raymond Albert
General Electric Plastics B.V. P.O. Box 117
NL-4600 AC Bergen op Zoom (NL)

(74) Representative : Schüler, Horst, Dr. et al
Kaiserstrasse 69
D-6000 Frankfurt/Main 1 (DE)

EP 0 239 157 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a polymer mixture which comprises an aromatic polycarbonate, a polybutylene terephthalate and an agent to improve he impact strength.

Polymer mixtures which comprise an aromatic polycarbonate, a polyalkylene terephthalate and an agent to improve the impact strength are known per se, for example, from US-A-3,864,428 ; EP-A-020605, EP-A-79477 and EP-A-110222.

The known polymer mixtures have a good resistance to chemicals and good mechanical properties, in particular a good impact strength. The known polymer mixtures are used, for example, to manufacture therefrom car bumpers by injection moulding. An additional requirement for car bumpers is hat they should have a good impact strength also at low temperatures.

Upon injection moulding polymer mixtures, the flow properties of the polymer mixture are of great importance. This applies in particular to the injection moulding of large components, for example, car bumpers. There exist various possibilities to improve the flow of polymers, for example, by adding special additives or by reducing the molecular weight of the polymer.

When the flow properties are improved by reducing the molecular weight, a deterioration of mechanical properties usually occurs, for example, the impact strength.

EP-A-0107048 deals with polymer mixtures comprising an aromatic polycarbonate resin, a poly(ethylene terephtalate) resin and an acrylate based core-polymerized acrylate shell polymer in an amount effective to improve the notched impact strength. The intrinsic viscosity of the aromatic polycarbonate lies between 30 and 100 ml/g and that of he poly(ethylene terephtalate) resin between 20 and 150 ml/g. Examples 2-10 investigate the influence of the intrinsic viscosity of the poly(ethylene terephtalate) on he impact properties : it is concluded there is "very little dependence on he intrinsic viscosity". Out of said examples the best flow properties (as shown by the "spiral flow") are obtained in example 5, wherein a poly(ethylene terephtalate) with a medium value for the intrinsic viscosity has been used.

NL-A-7702101, corresponding with GB-A-1,568,625, describes polymer mixtures comprising a poly(l,4-butylene terephtalate), an aromatic polycarbonate and glass fibres. Polymer mixtures of this known type have very poor notch impact strength and bad flow properties.

EP-A-0158822 describes polymer mixtures comprising an aromatic polycarbonate, a thermoplastic polyester, an impact modifier and an ester plasticizer. As a polyester there can be used a poly(ethylene terephtalate) having an intrinsic viscosity "more preferably" of 70-120 ml/g or a poly(butylene terephtalate) having an intrinsic viscosity of "more preferably 80-105 ml/g ". The examples deal with poly(ethylene terephtalate) only. In the examples the polycarbonate used is characterized by a melt flow rate of about 3.0-5.9 g/10 min., which corresponds with an intrinsic viscosity of about 57.5-65 ml/g. The melt viscosity has to be improved by adding a plasticizer ; this is not required for the polymer mixture of the invention !

The invention provides polymer mixtures of the type mentioned hereinbefore which have improved flow properties in combination with a good impact strength.

In the polymer mixture according to the invention the aromatic polycarbonate has an intrisic viscosity of less than 52 ml/g, measured in methylene chloride at 25°C and the polybutylene terephthalate has an intrisic viscosity of less than 105 ml/g measured in a 60/40 (wt./wt.) phenol/tetrachloroethane mixture at 30°C, the polymer mixture does not comprise glass fibres and has a weight ratio of the aromatic polycarbonate to the polybutylene terephthalate of more than 0.9.

It has been found quite unexpectedly that when an aromatic polycarbonate and a polybutylene terephthalate having the viscosity as stated hereinbefore is used, a polymer mixture is obtained which has a good impact strength, also at low temperatures. This is surprising because polycarbonate having a higher intrinsic viscosity has a better impact strength at low temperatures than a polycarbonate having a lower intrinsic viscosity. In particular a shift of the ductile/brittle transition temperature to higher values occurs.

The polymer mixture according to the invention comprises an agent to improve the impact strength. Such an agent is used in a quantity from 5 to 30, preferably 5 to 15% by weight calculated with respect to the total quantity of the aromatic polycarbonate, the polybutylene terephthalate and the agent to improve the impact strength.

In addition to the above-mentioned constituents, the polymer mixture according to the invention may comprise further conventionally used additives with the exception of glass fibres. When glass fibres are used, the impact strength, also at low temperatures, is considerably reduced. The additives are usually used in a quantity from 0 to 40% by weight calculated with respect to the total quantity of aromatic polycarbonate, polybutylene terephthalate and agent to improve the impact strength.

The invention also relates to articles formed from the above-meant polymer mixtures according to the invention.

The polymer mixture according to the invention comprises one or more constituents selected from each of the three mentioned groups :

A. aromatic polycarbonates and

B. polybutylene terephthalates and

C. agents to improve the impact strength. The polymer mixture according to the invention may comprise in addition one or more constituents selected from :

D. conventionally used additives.

A Aromatic polycarbonates

Aromatic polycarbonates are materials known per se. They are generally prepared by reacting a dihydric phenol compound with carbonate precursor, for example, phosgene, a halogen formiate or a carbonate ester. Aromatic polycarbonates are polymers which comprise units of the formula

$$( O - A - O - \overset{\overset{O}{\|}}{C} )$$

wherein A is a bivalent aromatic radical which is derived from the dihydric phenol which is used in the preparation of the polymer. As dihydric phenols may be used in the preparation of the aromatic polycarbonates mononuclear or polynuclear aromatic compounds which comprise two hydroxy radicals which are each bonded directly to a carbon atom of an aromatic nucleus.

Polycarbonates having an intrinsic viscosity of less than 52 ml/g methylene chloride at 25°C (according to ASTM D 2857-70 by means of a viscosimeter according to DIN 51562) are used in this polymer mixture according to the invention. The intrinsic viscosity is preferably between 46 and 50.

Examples of suitable dihydric phenols are : 2,2-bis-(4-hydroxyphenyl)propane ; hydroquinone ; resorcinol ; 2,2-bis-(4-hydroxyphenyl)pentane ; 2,4'-(dihydroxydiphenyl)methane ; bis-(2-hydroxyphenyl) methane ; bis-(4-hydroxyphenyl)methane ; bis-(hydroxy-5-nitro-phenyl)methane ; 1,1-bis(4hydroxyphenyl-)ethane ; 3,3-bis(hydroxyphenyl)pentane ; 2,2-dihydroxyphenyl ; 2,6-dihydroxynaphthalene ; bis-(4-hydroxydiphenyl)sulphone ; bis-3,5-diethyl-4-hydroxyphenyl)sulphone ; 2,2-bis-(3,5-dimethyl-4-hydroxyphenyl)propane ; 2,4'-dihydroxydiphenyl sulphone ; 5'-chloro-2,4'-dihydroxydiphenyl sulphone ; bis (4-hydroxyphenyl)diphenyl sulphone ; 4'4'-dihydroxydiphenyl ether ; 4,4'dihydroxy-3,3/-dichlorodiphenyl ether ; 4,4'-dihydroxy-2,5-dihydroxydiphenyl ether.

Other, likewise suitable,dihydric phenols are disclosed in US-A-2,999,835 ; 3,038,365 ; 3,334,154 and 4,131,575.

The aromatic polycarbonates may be prepared according to methods known per se : for example, by reacting a dihydric phenol with a carbonate precursor, for example, phosgene. For this purpose reference may be made to the United States Patent Specifications just mentioned and to US-A-4,018,750 and 4,123,426.They may also be prepared by a transesterification as described in US-A-3,153,008.

The branched polycarbonates known per se as described, for example, in US-A-4,001,184 are also suitable.

It is also possible in the polymer mixtures according to the invention to use as an aromatic polycarbonate a mixture of various polycarbonates, for example, as mentioned hereinbefore.

B. Polybutylene terephthalates

One or more polybutylene terephthalates having an intrinsic viscosity of less than 105 ml/g, preferably from 70 to 90 ml/g, are present in the polymer mixture according to the invention. The intrinsic viscosity has been determined in a phenoltetrachloroethane 60 to 40) at 30°C according to ASTM D 2857-70 by means of a viscosimeter according to DIN 51562.

Polybutylene terephthalates are compounds known per se. They are derived from butadien-1,4-diol and terephthalic acid. It is also possible to use copolyesters in which a part of the said glycol and/or of the terephthalic acid has been replaced by another glycol and/or carboxylic acid. In general, not more than 30 mol.%, preferably not more than 10 mol% of the glycol and/or terephthalic acid are replaced by other comonomers in such copolyesters.

It is preferred that the polymer mixture comprises as a polybutylene terephthalate a polymer or

copolymer which is built up for more than 90 mol.% from units derived from terephthalic acid and butane-1,4-diol.

It is also possible to use so-called block copolyesters as a polybutylene terephthalate. These block copolyesters are prepared, for example, by converting a polybutylene terephthalate with reactive terminal groups with a reactive polyester or copolyester in the presence of a transesterification catalyst.

Furthermore it is possible to incorporate a branching agent in the polybutylene terephthalate, for example, a glycol having three or more hydroxyl groups or a three-fold or multifold carboxylic acid.

C. Agents to improve the impact strength

The polymer mixture according to the invention comprises one or more agents to improve the impact strength. Any known agent to improve the impact strength of polymer mixtures which comprise an aromatic polycarbonate and a polyalkylene terephthalate may be used in the polymer mixture according to the invention.

The agent to improve the impact strength is generally used in a quantity from 5 to 30, preferably from 5 to 15% by weight calculated with respect to the overall quantity of aromatic polycarbonate, polyalkylene terephthalate and agent to improve the impact strength.

As an agent to improve the impact strength, a core-shell polymer prepared in several steps and consisting of a rubber-like core on which one or more shells have been grafted is preferably used in the polymer mixture according to the invention. The rubber-like core may be built up from rubberlike polyacrylates or from rubber-like polydienes, for example, polybutadiene. The rubber-like core may comprise comonomers, for example, styrenes, acrylonitrile. The rubber-like core is preferably built up for more than 50 mol.% from units derived from butadiene. One or more shells have been grafted on the rubber-like core. The shell preferably consists for more than 50 mol.% of units derived from $C_{1-6}$ alkyl methacrylates, for example, meythyl ethacrylate. The shell may also comprise comonomers, for example, acrylonitrile and styrene.

D. Conventionally used additives

In addition to the constituents mentioned hereinbefore, the polymer mixture may comprise one or more of the additives conventionally used for polymer mixtures. In the polymer mixture according to the invention, these additives are usually used in a quantity from 0 to 40% by weight calculated with respect to the overall quantity of the constituents mentioned above sub A, B and C.

The polymer mixture according to the invention may comprise as additives, for example, polyolefins, mould-release agents, agents to improve the flame-retarding properties, stabilisers, pigments and dyes. The polymer mixture according to the invention may not comprise any glass fibres. In fact, polymer mixtures comprising glass fibres have an unfavourable notch impact value.

The weight ratio aromatic polycarbonate to polyalkylene terephthalate in the polymer mixture according to the invention preferably lies at a value exceeding 0.9, even more preferably between 2.5 and 0.9. In other words, in the polymer mixture according to the invention, preferably a larger quantity by weight of the aromatic polycarbonate is used than of the polyalkylene terephthalate. When a weight ration of less than 0.9 is used, a further improvement of the flow properties occurs, it is true, but the ductile/brittle transition temperature is shifted to higher, less favourable values. When a weight ratio as described above of more than 2.5 is used, a polymer mixture having a reduced resistance to chemicals, for example, petrol, is obtained.

The polymer mixture according to the invention can be obtained according to the conventional methods of preparing polymer mixtures, for example, by melt extrusion.

The invention will now be described with reference to the ensuing specific examples.

Comparative examples A, B ; and I examples 11 and 111 according to the invention

Five polymer mixtures were prepared starting from aromatic polycarbonates derived from 2,2-bis-(4-hydroxyphenyl) propane and phosgene having different intrinsic viscosity values, namely of 49 ml/g and 47.5 ml/g for the polymer mixtures according to the invention and of 53 ml/g for the comparative examples. As a polyalkylene terephthalate, two different polybutylene terephthalates having different intrinsic viscosities were used, namely of 88 ml/g for the polymer mixture according to the invention and of 115 ml/g for the comparative examples. As an agent to improve the impact strength was used in all the polymer mixtures a core built up from butadiene and styrene units (more than 50 mol.% of butadiene) on which a shell of methyl methacrylate had been grafted. Moreover, all the polymer mixture comprised the same combination of additives.

The said constituents were mixed in an extruder in quantities as recorded hereinafter in the following table. The resulting extrudate was chopped up. Standardized test pieces were manufacturated from the resulting parts by injection moulding to determine the impact strength accoring to Izod with notch (ASTM D256 method A ; test pieces with thickness 3.2 mm). When lowering the temperature a lower value for the impact strength occurs. The temperature at which the impact strength is less than 50% of the impact strength at room temperature was determined. This value is indicated as ductile/brittle transition temperature (D/B temperature). In addition, standardized rods were injection moulded to determine the tensile strength and the elongation at fracture (according to ASTM D368). The values found for the elongation at fracture (tensile rate 50 mm per minute, 20°C) are recorded in the table below.

The flow properties were determined by measuring the melt viscosity (MV) according to DIN 54811 at 260°C and a shear rate of 1500 $s^{-1}$.

The corresponding values for the various aromatic polycarbonates and polybutylene terephthalates used in a pure form are recorded in the table below.

It may be seen from a comparison of the examples A and B that the use of a polycarbonate having a comparatively low intrinsic viscosity of 49 ml/g instead of polycarbonate having an intrinsic viscosity of 53 ml/g results in a small improvement of the flow properties with the D/B temperature remaining the same. A considerable improvement in the flow properties is obtained only when using both a polycarbonate and polybutylene terephthalate having low instrinsic viscosities (compare examples 11 and 111 with comparative example A). It is surprising that the D/B temperature remains sufficiently low. This is surprising, considering that pure polycarbonate having an intrinsic viscosity of 49 ml/g and 47.5 ml/g has a much higher D/B temperature than polycarbonate having an intrinsic viscosity of 53 ml/g.

Table

| Composition/example (parts by weight) | | | | | | A* | B* | I* | II | III |
|---|---|---|---|---|---|---|---|---|---|---|
| o Polycarbonate IV=47.5 ml/g | 100 | - | - | - | - | - | - | - | - | 50 |
| IV=49 ml/g | - | 100 | - | - | - | - | 50 | 40 | 50 | - |
| IV=53 ml/g | - | - | 100 | - | - | 50 | - | - | - | - |
| o Polybutylene terephthalate IV=115 ml/g | - | - | - | 100 | - | 39 | 39 | - | - | - |
| IV=88 ml/g | - | - | - | - | 100 | - | - | 49 | 39 | 39 |
| o Agent to improve the impact strength | - | - | - | - | - | 7.5 | 7.5 | 7.5 | 7.5 | 7.5 |
| o Additives | - | - | - | - | - | 3.5 | 3.5 | 3.5 | 3.5 | 3.5 |
| **Properties** | | | | | | | | | | |
| o Melt viscosity (Pa.S) | 450 | 550 | 700 | 295 | 100 | 300 | 270 | 210 | 220 | 200 |
| o D/B temperature (°C) | 10 | 0 | -15 | >20 | >20 | -30 | -30 | -5 | -30 | -25 |
| o Elongation at fracture (%) | 130 | 130 | 130 | >200 | 50 | 150 | 150 | 100 | 150 | 150 |

* comparative

It may also be considered surprising that the elongation at fracture of the polymer mixtures according to the invention (examples 11 and 111), inspite of the use of a polybutylene terephthalate having a low intrinsic viscosity of 88 ml/g, is equally large as in polymer mixtures which comprise a polybutylene terephthalate having an intrinsic viscosity of 115 ml/g. Compare also the values for the elongation at fracture for pure polybutylene terephthalate.

The preference for the choice of a given weight ratio polycarbonate to polybutylene terephthalate appears from a comparison of example 1 with example 11 according to the invention. By using a weight ratio of approximately 1.25 (example 11) a more favourable value for the D/B temperature with an approximately equal melt viscosity is obtained than when a weight ratio of approximately 0.8 is used.

## Claims

1. A polymer mixture which comprises an aromatic polycarbonate, a polyalkylene terephthalate and a agent to improve the impact strength, wherein the aromatic polycarbonate has an intrinsic viscosity of less than 52 ml/g, measured in methylene chloride at 25°C and the polyalkylene terephthalate is polybutylene terephtalate polymer or copolymer which has an intrinsic viscosity of less than 105 ml/g, measured in a 60/40 (wt.wt.) phenol/tetrachloroethane mixture at 30°C and wherein the polymer mixture does not comprise glass fibres and has a weight ratio of the aromatic polycarbonate to the polybutylene terephthalate of more than 0.9.

2. A polymer mixture as claimed in Claim 1, characterized in that the polymer mixture comprises 5-30% by weight of the agent to improve the impact strength calculated with respect to the total quantity of the aromatic polycarbonate, the polybutylene terephthalate and the agent to improve the impact strength.

3. A polymer mixture as claimed in Claim 1, characterized in that the polymer mixture comprises 0-40% by weight of additives calculated with respect to the total quantity of aromatic polycarbonate, polybutylene terephthalate and the agent to improve the impact strength.

4. A polymer mixture as claimed in Claim 1, characterized in that the polymer mixture comprises as a polybutylene terephthalate a polymer or copolymer which is built up for more than 90 mol.% from units derived from terephthalic acid and butane-1,4-diol.

5. A polymer mixture as claimed in Claim 1, characterized in that the polymer mixture comprises as an agent to improve the impact strength a core-shell polymer which is prepared in several steps and consists of a rubber-like core on which one or more shells have been grafted.

6. A polymer mixture as claimed in Claim 5 characterized in that the agent to improve the impact strength is built up from a rubber-like core having more than 50 mol.% of units derived from butadiene and at least one shell having more that 50 mol.% of units derived from a $C_{1-6}$ alkylmethacrylate.

7. Articles formed from the polymer mixture as claimed in one or more of the preceding Claims.

## Ansprüche

1) Polymermischung, die ein aromatisches Polycarbonat, ein Polyalkylenterephthalat und ein Mittel zur Verbesserung der Schlagfestigkeit enthält, worin das aromatische Polycarbonat eine grundmolare Viskositätszahl von weniger als 52 ml/g, gemessen in Methylenchlorid bei 25°C aufweist, und das Polyalkylenterephthalat Polybutylenterephthalat polymer oder -copolymer ist, welches eine grundmolare Viskositätszahl von weniger als 105 ml/g, gemessen in einer Phenol/Tetrachloräthanmischung im Gewichtsverhältnis von 60/40 bei 30°C aufweist und worin die Polymermischung keine Glasfasern enthält und ein Gewichtsverhältnis des aromatischen Polycarbonats zum Polybutylen - teraphthalat von mehr als 0,9 aufweist.

2) Polymermischung nach Anspruch 1, dadurch gekennzeichnet, daß die Polymermischung 5 - 30 Gew.-% des Mittels zur Verbesserung der Schlagfestigkeit, berechnet mit Bezug auf die Gesamtmenge des aromatischen Polycarbonats, des Polybutylenterephthalats und des Mittels zur Verbesserung der Schlagfestigkeit.

3) Polymermischung nach Anspruch 1, dadurch gekennzeichnet, daß die Polymermischung 0 bis 40 Gew.-% berechnet mit Bezug auf die Gesamtmenge des aromatischen Polycarbonats, des Polybutylenterephthalats und des Mittels zur Verbesserung der Schlagfestigkeit enthält.

4) Polymermischung nach Anspruch 1, dadurch gekennzeichnet, daß die Polymermischung als ein Polybutylenterephthalat ein Polymeres oder Copolymeres enthält, welches aus mehr als 90 mol % Einheiten

aufgebaut ist, die sich von Terephthalsäure und Butan-1,4-diol ableiten.

5) Polymermischung nach Anspruch 1, dadurch gekennzeichnet, daß die Polymermischung als Mittel zur Verbesserung der Schlagfestigkeit ein KernMantelpolymer enthält, welches in mehreren Stufen hergestellt worden ist, und aus einem gummiartigen Kern besteht, auf welchen ein oder mehrere Mäntel aufgefropft worden sind.

6) Polymermischung nach Anspruch 5, dadurch gekennzeichnet, daß das Mittel zur Verbesserung der Schalgfestigkeit aus einem gummiartigen Kern aufgebaut ist mit mehr als 50 mol % Einheiten die von Butadien abgeleitet sind une wenigstens einem Mantel mit mehr als 50 mol % Einheiten die von einem $c_{1-6}$ Alkylmethacrylat abgeleitet sind.

7) Gegenstände, die aus der Polymermischung nach einem oder mehreren der vorstehenden Ansprüche ausgeformt sind.

## Revendications

1. Mélange de polymères qui comprend un polycarbonate aromatique, un polyalkylène téréphtalate et un agent pour améliorer la résistance au choc, dans lequel le polycarbonate aromatique à une viscosité intrinsèque inférieure à 52 ml/g, mesurée dans le chlorure de méthylène à 25°C, et le polyalkylène téréphtalate est un polymère ou copolymère de polybutylène téréphtalate qui a une viscosité intrinsèque inférieure à 105 ml/lg, mesurée dans un mélange 40/60 (poids/poids) de phénol/tétrachloroéthylène à 30°C, et lequel mélange de polymères ne comprend pas de fibres de verre et présente un rapport pondéral du polycarbonate aromatique au polybutylène téréphtalate supérieur à 0,9.

2. Mélange de polymères selon la revendication 1, caractérisé en ce qu'il comprend 5 à 30% en poids de l'agent pour améliorer la résistance au choc, calculés relativement à la quantité totale du polycarbonate aromatique, du polybutylène téréphtalate et de l'agent pour améliorer la résistance au choc.

3. Mélange de polymères selon la revendication 1, caractérisé en ce qu'il comprend 0 à 40% en poids d'additifs calculés relativement à la quantité totale du polycarbonate aromatique, du polybutylène téréphtalate et de l'agent pour améliorer la résistance au choc.

4. Mélange de polymères selon la revendication 1, caractérisé en ce qu'il comprend, comme polybutylène téréphtalate, un polymère ou copolymère qui est constitué à plus de 90% molaires de motifs dérivés d'acide téréphtalique et de butane-1,4-diol.

5. Mélange de polymères selon la revendication 1, caractérisé en ce qu'il comprend, comme agent pour améliorer la résistance au choc, un polymère centre-enveloppe qui est préparé en plusieurs étapes et est constitué d'un centre caoutchoutique sur lequel une ou plusieurs enveloppes ont été greffées.

6. Mélange de polymères selon la revendication 5, caractérisé en ce que l'agent pour améliorer la résistance au choc est constitué d'un centre caoutchoutique, ayant plus de 50% molaires de motifs dérivés du butadiène, et d'au moins une enveloppe ayant plus de 50% molaires de motifs dérivés d'un méthacrylate d'alkyle en $C_{1-6}$.

7. Articles formés à partir d'un mélange de polymères selon une ou plusieurs des revendications précédentes.